# NEW EUROPEAN PATENT SPECIFICATION

(11) **EP 0 039 319 B2**
(45) Date of publication and mention of the opposition decision: **17.09.1997**
(45) Mention of the grant of the patent: 04.09.1985
(21) Application number: 81850063.9
(22) Date of filing: 09.04.1981
(51) Int. Cl.: F16K 1/44

(54) **Double seat valve**
Doppelsitzventil
Robinet à double siège

(30) Priority: 24.04.1980 SE 8003130
(43) Date of publication of application: 04.11.1981
(73) Proprietor: ALFA-LAVAL AB, 147 00 Tumba (SE)
(72) Inventor: Lundquist, Gunnar, S-212 34 Malmö (SE); Mases, Per-Erik, S-216 18 Malmö (SE); Carlsson, Torsten, S-151 41 Södertälje (SE); Nyqvist, Harry, S-146 00 Tullinge (SE)
(74) Representative: Vonnemann, Gerhard, Dr.-Ing.

(56) References cited:
- DE-A- 2 532 838
- DE-A- 2 623 039
- DE-A- 2 623 301
- DE-A- 2 916 182
- DE-B- 2 532 202
- DE-B- 2 632 587
- DE-C- 354 818
- FR-A- 1 204 043
- FR-A- 1 590 865
- GB-A- 668 563
- GB-A- 1 424 169

## Description

The invention relates to a double seat valve comprising a valve housing having at least two openings for two conduits for fluid inlet and outlet, first and second coaxial valve seats disposed between said openings, first and second valve closure members each guided in said valve housing for coaxial movement relative to each other and to their respective valve seats between an open position and a closed position, realizing together in said closed position a double seal between said openings, said first closure member being a slide piston having radial sealing means disposed at an end portion thereof and adapted to abut during its opening movement against said second closure member and to move the latter during further opening movement also into its open position, said first valve seat being cylindrical and adapted to sealingly receive said slide piston in said closed position, a leakage space defined between said closure members in both the closed and the open position thereof, and a drain outlet permanently connecting said leakage space to the outside of the valve.

Such double seat valves are mainly used in the brewery and dairy industries to separate connected conduits containing different products in order to reliably prevent intermixing.

The double seat valve of this type known from DE-A-25 23 202 comprises two closure members cooperating with a cylindrical bore between the inlet and outlet parts of the housing, at least the upper closure member being a slide piston which is rigidly connected to drive means and can be downwardly moved against the force of a spring to abut the lower closure member and thereafter further move the latter into its open position. This known valve avoids fluid losses during valve actuation, but opening of the valve is slow due to the distance the valve assembly has to move.

From DE-B-26 32 587 there is known a similar double seat valve having valve discs cooperating with axial valve seats, so that during each actuation thereof there occurs a loss of liquid product. This valve is also not tight against pressure hammers.

Finally, DE-C-35 48 18 describes a mud valve for steam boilers and the like, comprising a housing closed only towards the atmosphere, a bell-shaped closure member guided between ribs of said housing and connected to a metal hose for supplying washing liquid, a hallow second closure member guided between internal ribs of the bell-shaped closure member and adapted to be lifted off a conical valve seat into abutment with the bell-shaped closure member and thereafter lifting same also into its open position. When closing the valve there will first the bell-shaped closure member sealingly abut its valve seat so that during the further closing movement any mud on the conical valve seat is washed away by washing liquid flowing through openings of the hollow second closure member. This construction, however, is not suited to prevent intermixing and cannot withstand pressure forces acting on the outer surface of the second closure member.

Accordingly, it is the object of the invention to provide a double seat valve of the type mentioned above which besides leakage-free operation permits a guide actuation.

For solving this object the double seat valve of the type defined is according to the invention characterized in that the radial sealing means of said slide piston in said open position is surrounded by said second closure member, said second closure member has at its end facing said slide piston a recess having a substantially cylindrical circumferential wall aligned with said cylindrical valve seat, and said recess is dimensioned to sealingly receive during opening movement said end portion and said radial sealing means of the slide piston before said second closure member opens, wherein said second closure member has an axial seal at the end surrounding said recess.

Preferred embodiments of the double seat valve are defined in the subclaims.

A preferred double-seat valve will be described in greater detail below with reference to the accompanying drawings in which:
Fig. 1 is a longitudinal section through a double seat valve showing the left-hand half of the valve in open position and the right hand half in closed position;
Fig. 2 is a magnified partial cross-section of one radial seal and one axial seal of the valve in the open position; and
Fig. 3 is a cross-section through an auxiiiary pneumatic motor coupled to the upper end of the valve housing.

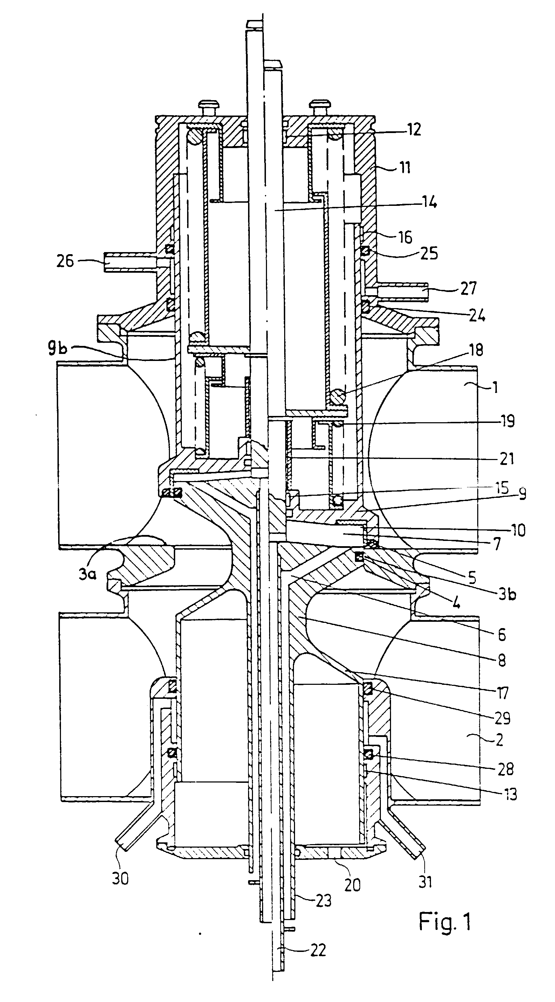

The double seat valve shown in Fig. 1 comprises a valve housing 11 having openings for two conduits 1 and 2, and two coaxial valve seats 3a and 3b disposed between said conduit openings. In the valve housing 11 there are guided two closure members for coaxial movement relative to each other and a corresponding valve seat 3a or 3b, respectively, between an open position and a closed position. The closure members 8 and 9 in their closed position provide a double seal between the conduit openings. the first closure member being a slide piston 8 having radial sealing means 4 and being operative for movement between an open position and a closed position in which it is sealingly received in a cylindrical valve seat 3b. The slide piston 8 is adapted to abut during its opening movement against the other closure member 9 so as to move the same during the further opening movement also into its open position. Between the two closure members 8 and 9 there is defined in both the closed and the open position thereof a leakage space 7 serving to prevent intermixing of the products in conduits 1 and 2 even if the sealing means of one of the closure members should become damaged. The leakage space 7 is permanently connected via a drain outlet 6 to the outside of the valve. Thus, any potential leakage past any of the sealing means of the closure members 8 and 9, respectively, is drained off via the leakage space 7 and the drain outlet 6.

The second closure member 9 is provided at its lower end with axial sealing means 5 adapted for axially sealing in the closed position against an axial seat 3a of the valve housing 11. The axially sealing second closure member 9 has its end facing the slide piston 8 a recess 10 having a cylindrical circumferential wall being aligned with the cylindrical valve seat 3b. The edges of the cylindrical valve seat 3b and the cylindrical circumferential wall of the recess 10 are bevelled so that during the opening movement of the closure members the lower slide piston 8 is operative to slide upwardly into a position protruding into the recess 10 with the radial sealing means 4 being smoothly transferred from the cylindrical valve seat 3b to the cylindrical circumferential wall of recess 10 establishing a fluid-tight seal between those closure members 8 and 9, respectively. After the slide piston 8 abuts the second closure member 9 both closure members 8 and 9 are upwardly moved in common until the valve is in its completely open position (left half of Fig. 1). During the opening and closing movement, the radial sealing means 4 are largely protected from wear by the bevelled edges of the cylindrical valve seat 3b and the aligned cylindrical circumferential wall of recess 10.

The slide piston 8 is provided with a balancing piston 17 having the same diameter as the cylindrical valve seat 3b and being sealingly guided in the lower part of the valve housing 11. Likewise, the second closure member 9 is shaped as a substantially cylindrical piston having at its side turned away from the recess 10 a cylindrical piston wall sealingly guided in the upper part of the valve housing 11. The diameter of said piston wall is slightly smaller than that of the axial sealing means 5.

The double seat valve shown is balanced against a pressure and pressure hammers in the conduits 2 and 1 in both the closed and open positions of the closure members, because the upper closure member 9 is substantially cylindrical and the slide system 8 has a balancing piston 17 of the same diameter as the radial valve seat 3b. In fact, the second closure member 9 is not fully balanced in the closed position, because the axial sealing means abut in axial direction against the valve seat 3a so that the excess pressure in the upper conduit 1 corresponding to the difference in cross-section between the axial sealing means 5 and the cylindrical piston wall act as an additional closing force.

The prime mover of the double-seat valve is an air motor which is built into the balancing piston 17 of the slide piston 8. A closure spring 18 and an auxiliary spring 19 are built into the internal space of the second closure member 9. Since the spaces within the balancing piston 17 and the cylindrical wall of the second closure member are utilized for the air motor and the springs, respectively, the entire valve will be low in construction height.

When the valve is opened, compressed air is led into the balancing piston 17 through an inlet 20. The opening force will overcome the spring force of the closing spring 18 so that the two closure members are brought together. The weaker auxiliary spring 19 acts to hold together the lower and upper closure members 8 and 9. After their abutment, the opening movement continues to the open position shown in the left half of Fig. 1.

When the air pressure ceases, the closure spring 18 forces the abutting closure members 8 and 9 downwardly in the direction towards the axial valve seat 3a where the upper closure member 9 comes to rest, whereas the slide piston 8 is further moved to its closed position within the cylindrical valve seat 3b. The closing force of the spring 18 then acts on the axial seal 5 via the sleeve 21 and the upper closure member 9.

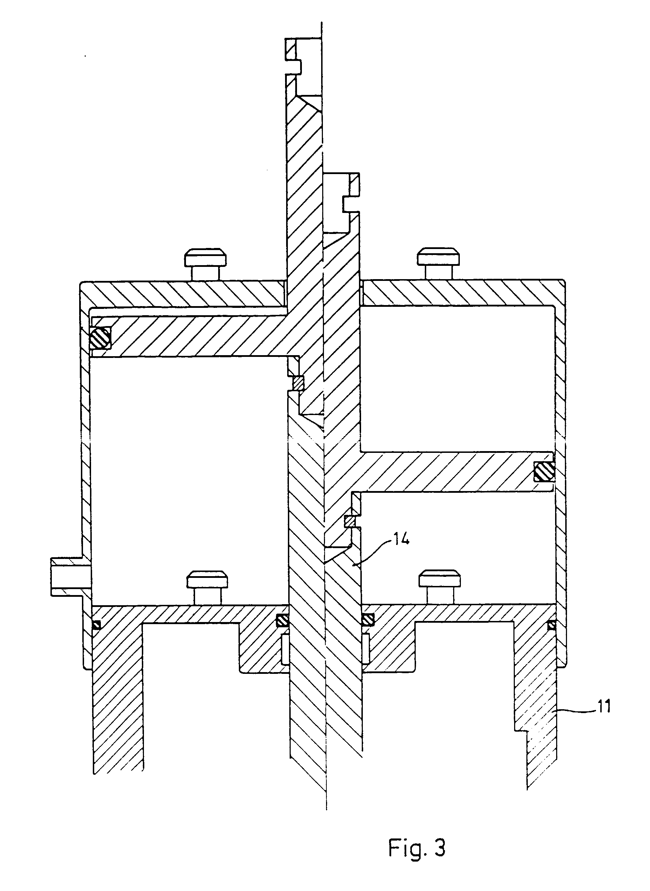

If the available air pressure is low, an additional air motor may be placed on the upper side of the valve housing 11, as shown in Fig. 3. In this case there is supplied air pressure in parallel to both air motors in order to obtain the required force for opening the valve.

It is desirable to provide means for washing the leakage space 7 and those surfaces of the closure members 8 and 9 which during the operation of the valve are wetted with the products in the conduits 1 or 2, respectively.

Three spaces need to be washed, these operations being carried out in parallel. The leakage space 7 is washed by introducing washing liquid through an axial inlet channel 22. The washing liquid is discharged via a larger concentric tube 23 to which the drain outlets 6 lead. The stroke length of the cylindrical wall of the upper closure member 9 is washed in a washing space disposed between the seals 24 and 25 and having an inlet 26 and an outlet 27. The stroke length of the balancing piston 17 is washed in a similar manner in a washing space disposed between the seals 28 and 29 and having an inlet 30 and an outlet 31.

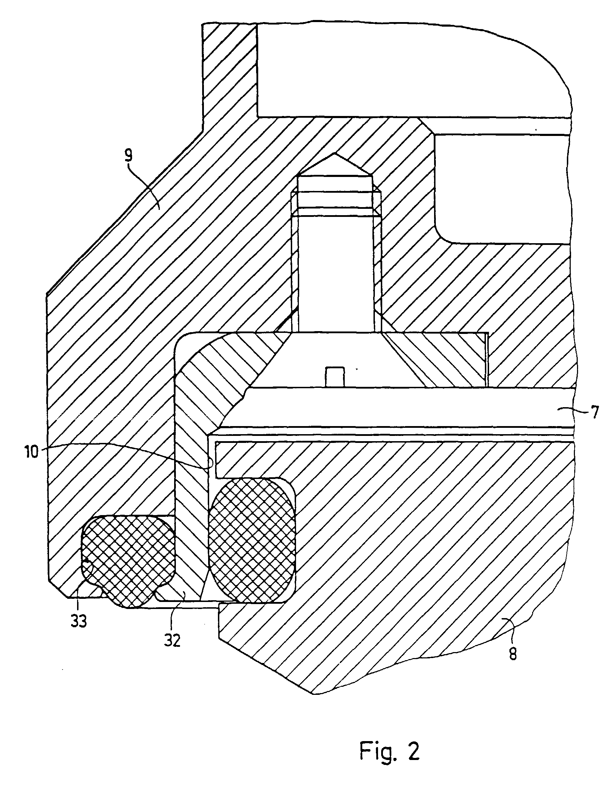

The mounting of the axial seal 5 can be seen from Fig. 2. A ring 32 is screwed into the upper closure member 9 forming a recess 33 therewith in which recess the axial seal is lodged.

## Claims

1. A double seat valve comprising a valve housing (11) having at least two openings for two conduits (1,22) for fluid inlet and outlet, first and second coaxial valve seats (3a,3b) disposed between said openings, first and second valve closure members (8,9) each guided in said valve housing for coaxial movement relative to each other and to their respective valve seats (3a,3b) between an open position and a closed position, realizing together in said closed position a double seal between said openings, said first closure member being a slide piston (8) having radial sealing means (4) disposed at an end portion thereof and adapted to abut during its opening movement against said second closure member (9) and to move the latter during further opening movement also into its open position, said first valve seat (3b) being cylindrical and adapted to sealingly receive said end portion of said slide piston (8) in said closed position, a leakage space (7) defined between said closure members (8,9) in both the closed and the open position thereof, and a drain outlet (6) permanently connecting said leakage space (7) to the outside of the valve,
*characterized in that:*
the radial sealing means (4) of said slide piston (8) in said open position is surrounded by said second closure member (9), said second closure member (9) has at its end facing said slide piston (8) a recess (10) having a substantially cylindrical circumferential wall aligned with said cylindrical valve seat (3b), and said recess (10) is dimensioned to sealingly receive during opening movement said end portion and said radial sealing means (4) of the slide piston (8) before said second closure member (9) opens, wherein said second closure member (9) has an axial seal (5) at the end surrounding said recess (10).

2. A valve as recited in claim 1, characterized in that at least one of said closure members (8, 9) has a piston wall shaped to substantially balance pressure forces acting thereon by the fluid in the conduits (1, 2).

3. A valve as recited in claim 2, characterized in that said slide piston (8) has a balancing piston (17) sealingly guided in the valve housing and having the same diameter as said cylindrical valve seat (3b).

4. A valve as recited in claim 2, characterized in that said second closure member is shaped as a substantially cylindrical piston having axial sealing means (5) at the end surrounding the recess (10), and on its side turned away from the recess (10) a cylindrical piston wall sealingly guided in the valve housing and having a diameter slightiy smaller than that of the axial sealing means (5).

5. A valve as recited in any one of claims 1 to 4, characterized in that the radial sealing means (4) of said slide piston (8) are adapted to be shifted during the opening movement from said cylindrical valve seat (3b) into sealing contact with the cylindrical circumferential wall of said recess (10) before said slide piston (8) abuts said second closure member (9).

6. A valve as recited in any one of claims 1 or 5, characterized in that the aligned surfaces of said cylindrical valve seat (3b) and said cylindrical circumferential surface of the recess (10) have bevelled edges to provide smooth transition of the radial sealing means (4).

7. A valve as recited in any one of claims 3 to 6 comprising spring means permanently urging the closure members (8, 9) into their closed position, characterized by:
first spring means (18) disposed within the internal space of said second closure member (9) and permanently acting on a rod (14) of said slide piston (8) sealingly extending through said second closure member (9) for urging same into its closed position, and
second spring means (19) disposed within the internal space of said second closure member (9) and urging same during the opening of the valve towards said slide piston (8).

8. A valve as recited in claim 7 further comprising drive means for moving the slide piston (8) into its open position, characterized in that the balancing piston (17) of said slide piston (8) is the movable part of a pneumatic motor adapted to move said slide piston (8) against the urging force of said first spring means (18) into abutment with said second closure member (9) and thereafter moving both closure members (8, 9) into their open position.

9. A valve as recited in claim 7 or 8, characterized by an auxiliary pneumatic motor acting on said slide piston (8) and adapted to urge the latter into its open position.

10. A valve as recited in any one of claims 1 to 9, wherein said slide piston (8) is provided with an axial rod (14) sealingly guided in the upper part of the valve housing and an axial drain tube (23) sealingly guided in the bottom part of the valve housing and permanently communicating with the leakage space (7), characterized in that said slide piston (8) is further provided with an internal axial inlet channel (22) for introducing washing liquid into the leakage space (7).

11. A valve as recited in any one of claims 2 to 10, characterized in that the valve housing is provided with annular washing spaces for cleaning the stroke length of the circumferential surface of the balancing piston (17) or the cylindrical wall (9b), respectively, each washing space being disposed between annular seals (24, 25 or 28, 29, respectively) and having an inlet (26 or 30, respectively) and an outlet (27 or 31, respectively) for washing liquid.

## Patentansprüche

1. Doppelsitzventil, umfassend:
ein Ventilgehäuse (11) mit mindestens zwei Öffnungen für zwei Leitungen (1, 2) zum Fluideinlaß und -auslaß, zwei zwischen diesen Öffnungen angeordneten koaxialen Ventilsitzen (3a, 3b), zwei Ventilschließgliedern (8, 9), die jeweils im Ventilgehäuse zur koaxialen Bewegung relativ zueinander und zu den entsprechenden Ventilsitzen (3a, 3b) zwischen einer
Offenstellung und einer Schließstellung geführt sind und in ihrer Schließstellung eine Doppeldichtung zwischen den besagten Öffnungen bewirken, wobei das erste Schließglied ein Schieberkolben (8) mit radialen Dichtmitteln (4) ist, die an seinem Endabschnitt angeordnet sind und dazu vorgesehen ist, sich während seiner Öffnungsbewegung gegen das zweite Schließglied (9) anzulegen und letzteres bei der weiteren Öffnungsbewegung ebenfalls in seine Offenstellung zu bewegen, wobei der erste Ventilsitz (3b) zylindrisch ist und vorgesehen ist, um den Endabschnitt des Schieberkolbens (8) dichtend in der Schließstellung aufzunehmen, einen Lekageraum (7), der zwischen den Schließgliedern (8 ,9) in deren Schließstellung und deren Offenstellung gebildet ist, und einen Ablaufauslaß (6), der den Lekageraum (7) permanent mit der Außenseite des Ventils verbindet,
dadurch gekennzeichnet, daß:
die radialen Dichtungsmitteln (4) des Schieberkolbens (8) in der Offenstellung vom zweiten Schließglied (9) umschlossen ist, das zweite Schließglied (9) an seinem dem Schieberkolben (8) zugewandten Ende eine Ausnehmung (10) mit einer im wesentlichen zylindrischen mit dem zylindrischen Ventilsitz (3b) fluchtende Umfangswand besitzt, und die Ausnehmung (10) dimensioniert ist, um während der Öffnungsbewegung den Endabschnitt und die radialen Dichtmittel (4) des Schieberkolbens (8) dichtend aufzunehmen, bevor das zweite Schließglied (9) öffnet, wobei das zweite Schließglied (9) eine axiale Dichtung (5) an dem die Ausnehmung (10) umgebenden Ende aufweist.

2. Ventil, wie im Anspruch 1 aufgeführt, dadurch gekennzeichnet, daß mindestens eines der Schießglieder (8, 9) eine Kolbenwand aufweist, die zum weitgehenden Ausgleichen von darauf durch das Fluid in den Leitungen (1, 2) ausgeübten Druckkräften geformt ist.

3. Ventil, wie im Anspruch 2 aufgeführt, dadurch gekennzeichnet, daß der Schieberkolben (8) einen im Ventilgehäuse dichtend geführten Ausgleichskolben (17) aufweist, der den gleichen Durchmesser hat, wie der zylindrische Ventilsitz (3b).

4. Ventil, wie im Anspruch 2 aufgeführt, dadurch gekennzeichnet, daß das zweite Schließglied als im wesentlichen zylindrischer Kolben mit axialen Dichtungsmitteln (5) an dem die Ausnehmung (10) umgebenden Ende ausgebildet ist und auf seiner von der Ausnehmung (10) abgewandten Seite eine im Ventilgehäuse dichtend geführte, zylindrische Kolbenwand besitzt, die einen etwas kleineren Durchmesser hat, als die axialen Dichtungsmittel (5).

5. Ventil, wie in einem der Ansprüche 1 bis 4 aufgeführt, dadurch gekennzeichnet, daß die radialen Dichtmittel (4) des Schieberkolbens (8) so angeordnet sind, daß sie während des Öffnens des Ventils von dem zylindrischen Ventilsitz (3b) in dichtende Berührung mit der zylindrischen Umfangswand der Ausnehmung (10) verschoben werden, bevor der Schieberkolben (8) gegen das zweite Schließglied (9) zur Anlage kommt.

6. Ventil, wie in einem der Ansprüche 1 oder 5 aufgeführt, dadurch gekennzeichnet, daß die fluchtenden Flächen des zylindrischen Ventilsitzes (3b) und der zylindrischen Umfangswand der Ausnehmung (10) abgeschrägte Kanten zur Erzielung eines glatten Überganges der radialen Dichtungsmittel (4) aufweisen.

7. Ventil, wie in einem der Ansprüche 3 bis 6 aufgeführt, mit die Schließglieder (8, 9) permanent in ihre Schließstellung drängenden Federvorrichtungen, gekennzeichnet durch: im Innenraum des zweiten Schließgliedes (9) angeordnete erste Federvorrichtungen (18), die permanent auf eine sich dichtend durch das zweite Schließglied (9) hindurch erstreckende Stange (14) des Schieberkolbens (8) einwirken, um diesen in seine Schließstellung zu drängen, und im Innenraum des zweiten Schließgliedes (9) angeordnete zweite Federvorrichtungen (19), welche dieses während des Öffnens des Ventiles zum Schieberkolben (8) hin drängen.

8. Ventil, wie im Anspruch 7 aufgeführt, das weiterhin Antriebsvorrichtungen zur Bewegung des Schieberkolbens (8) in seiner Offenstellung aufweist, dadurch gekennzeichnet, daß der Ausgleichskolben (17) des Schieberkolbens (8) der bewegliche Teil eines pneumatischen Motors ist, der zur Bewegung des Schieberkolbens (8) gegen die Kraft der ersten Federvorrichtung (18) zur Anlage mit dem zweiten Schließglied (9) und danach zur Bewegung beider Schließglieder (8, 9) in ihre Offenstellung ausgelegt ist.

9. Ventil, wie im Anspruch 7 oder 8 aufgeführt, gekennzeichnet durch einen pneumatischen Hilfsmotor, der auf den Schieberkolben (8) einwirkt und dazu ausgelegt ist, diesen in seine Offenstellung zu drängen.

10. Ventil, wie in einem der Ansprüche 1 bis 9 aufgeführt, wobei der Schieberkolben (8) eine im Oberteil des Ventilgehäuses dichtend geführte axiale Stange (14) und ein im Unterteil des Ventilgehäuses dichtend geführtes, axiales Ablaufrohr (23) aufweist, das permanent mit dem Leckageraum (7) kommuniziert, dadurch gekennzeichnet, daß der Schieberkolben (8) weiterhin mit einem inneren axialen Einlaßkanal (22) zur Einführung von Waschflüssigkeit in den Leckageraum (7) gestattet ist.

11. Ventil, wie in einem der Ansprüche 2 bis 10 aufgeführt, dadurch gekennzeichnet, daß das Ventilgehäuse mit ringförmigen Waschräumen zur Reinigung der Hublänge der Umfangsflächen des Ausgleichskolbens (17) bzw. der zylindrischen Kolbenwand (9b) versehen ist, wobei jeder Waschraum zwischen Ringdichtungen (24, 25 bzw. 28, 29) angeordnet ist und einen Einlaß (26 bzw. 30) einen Auslaß (27 bzw. 31) für Waschflüssigkeit aufweist.

## Revendications

1. Soupape à double siège comprenant un carter de soupape (11) muni d'au moins deux ouvertures destinées à recevoir deux conduits (1, 22) d'entrée et de sortie de fluide, un premier siège de soupape et un second siège de soupape coaxiaux (3a, 3b) disposés entre les ouvertures, un premier élément d'obturation de soupape et un second élément d'obturation de soupape (8, 9) guidés chacun dans le carter de soupape de manière à se déplacer coaxialement l'un par rapport à l'autre et par rapport à leurs sièges de soupape respectifs (3a, 3b), entre une position d'ouverture et une position d'obturation pour former ainsi ensemble, lorsqu'ils sont en position d'obturation, un joint d'étanchéité double entre les ouvertures, le premier élément d'obturation étant un piston coulissant (8) muni de moyens d'étanchéité radiaux (4) disposés à l'endroit d'une partie d'extrémité de celui-ci et destinés à venir buter, pendant son mouvement d'ouverture, contre le second élément d'obturation (9) et à déplacer ce dernier, pendant la poursuite du mouvement d'ouverture, pour l'amener également dans sa position d'ouverture, le premier siège de soupape (3b) étant cylindrique et destiné à recevoir de manière étanche la partie d'extrémité du piston coulissant (8) dans la position d'obturation, un espace de fuite (7) défini entre les éléments d'obturation (8, 9) dans leurs deux positions d'obturation et d'ouverture, et un orifice d'évacuation (6) reliant en permanence l'espace de fuite (7) à l'extérieur de la soupape,
caractérisée en ce que :
- les moyens d'étanchéité radiaux (4) du piston coulissant (8), dans la position d'ouverture, sont entourés par le second élément d'obturation (9),
- le second élément d'obturation (9) comporte, à son extrémité venant en face du piston coulissant (8), une cavité (10) présentant une paroi périphérique parfaitement cylindrique alignée avec le siège de soupape cylindrique (3b), et
- la cavité (10) est dimensionnée pour recevoir de manière étanche, pendant le mouvement d'ouverture, la partie d'extrémité et les moyens d'étanchéité radiaux (4) du piston coulissant (8) avant que le second élément d'obturation (9) s'ouvre, le second élément d'obturation (9) comportant un joint d'étanchéité axial (5) à l'extrémité entourant la cavité (10).

2. Soupape selon la revendication 1,
caractérisée en ce que
l'un au moins des éléments d'obturation (8, 9) comporte une paroi de piston formée pour équilibrer parfaitement les forces de pression appliquées sur celle-ci par le fluide contenu dans les conduits (1, 2).

3. Soupape selon la revendication 2,
caractérisée en ce que
le piston coulissant (8) comporte un piston d'équilibrage (17) guidé de manière étanche dans le carter de soupape, et présentant le même diamètre que le siège de soupape cylindrique (3b).

4. Soupape selon la revendication 2,
caractérisée en ce que
le second élément d'obturation est réalisé sous la forme d'un piston parfaitement cylindrique comportant des moyens d'étanchéité axiaux (5) à l'extrémité entourant la cavité (10), et, à son extrémité opposée à la cavité (10), une paroi de piston cylindrique guidée de manière étanche dans le carter de soupape et présentant un diamètre légèrement plus petit que celui des moyens d'étanchéité axiaux (5).

5. Soupape selon l'une quelconque des revendications 1 à 4,
caractérisée en ce que
les moyens d'étanchéité radiaux (4) du piston coulissant (8) sont conçus pour être déplacés pendant le mouvement d'ouverture partant du siège de soupape cylindrique (3b) pour venir en contact d'étanchéité avec la paroi périphérique cylindrique de la cavité (10) avant que le piston coulissant (8) vienne buter contre l'élément d'obturation (9).

6. Soupape selon l'une quelconque des revendications 1 à 5,
caractérisée en ce que
les surfaces alignées du siège de soupape cylindrique (3b) et de la surface 35 périphérique cylindrique de la cavité (10), comportent des bords chanfreinés de manière a obtenir une transition douce des moyens d'étanchéité radiaux (4).

7. Soupape selon l'une quelconque des revendications 3 à 6, comprenant des moyens de ressort poussant en permanence les éléments d'obturation vers leur position d'obturation, soupape caractérisée en ce que
- le premier moyen de ressort (18) est disposé dans l'espace intérieur du second élément d'obturation (9) et pousse en permanence une tige (14) du piston coulissant (8) traversant de manière étanche le second élément d'obturation (9) pour le pousser en position d'obturation, et
- le second moyen de ressort (19) est disposé dans l'espace intérieur du second élément d'obturation (9) et pousse celui-ci vers le piston coulissant (8) pendant l'ouverture de la soupape.

8. Soupape selon la revendication 7, comprenant, en outre, des moyens d'entraînement destinés à faire passer le piston coulissant (8) dans sa position d'ouverture,
soupape caractérisée en ce que
le piston d'équilibrage (17) du piston coulissant (8) constitue la partie mobile d'un moteur pneumatique destiné à entraîner le piston coulissant (8) contre la force de poussée du premier moyen de ressort (18), pour l'amener en butée contre le second élément d'obturation (9), puis pour entraîner ensuite les deux éléments d'obturation (8, 9) vers leur position d'ouverture.

9. Soupape selon l'une quelconque des revendications 7 et 8,
caractérisée en ce qu'
elle comprend un moteur pneumatique auxiliaire agissant sur le piston coulissant (8) et destiné à pousser ce dernier en position d'ouverture.

10. Soupape selon l'une quelconque des revendications 1 à 9, dans laquelle le piston coulissant (8) est muni d'une tige axiale (17) guidée de manière étanche dans la partie supérieure du carter de soupape, et d'un tube d'évacuation axial (23) guidé de manière étanche dans la partie Inférieure du carter de soupape et communiquant en permanence avec l'espace de fuite (7),
soupape caractérisée en ce que
le piston coulissant (8) est, en outre, muni d'un passage d'entrée axial intérieur (22) destiné à introduire un liquide de lavage dans l'espace de fuite (7).

11. Soupape selon l'une quelconque des revendications 2 à 10,
caractérisée en ce que
le carter de soupape est muni d'espaces de lavage annulaires destinés à nettoyer la longueur de course de la surface périphérique du piston d'équilibrage (17) ou de la paroi cylindrique (9b), chaque espace de lavage étant respectivement disposé entre les joints d'étanchéité annulaires (24, 25 ou 28, 29 respectivement) et comportant un orifice d'entrée (respectivement 26 ou 30) et un orifice de sortie (respectivement 27 ou 31) du liquide de lavage.
